# EUROPEAN PATENT APPLICATION

(11) **EP 4 425 649 A1**
(43) Date of publication of application: **04.09.2024**
(21) Application number: 24155659.6
(22) Date of filing: 05.02.2024
(51) Int. Cl.: H01M 10/613, H01M 10/617, H01M 10/625, H01M 10/643, H01M 10/6557, H01M 10/6567, H01M 10/6568, H01M 50/213

(54) **A BATTERY COOLING BLOCK**

(30) Priority: 01.03.2023 GB 202302997
(71) Applicant: Rolls-Royce plc, London N1 9FX (GB)
(72) Inventor: Mathivanan, Anand Prabhu, Derby, DE24 8BJ (GB); Ng, Pei Sin, Derby, DE24 8BJ (GB); Palanisamy, Mohankumar, Derby, DE24 8BJ (GB); Zagrodnik, Michael, Derby, DE24 8BJ (GB); Yap, Yang Yueng Melvin, Derby, DE24 8BJ (GB); Gupta, Amit, Derby, DE24 8BJ (GB)
(74) Representative: Rolls-Royce plc

(57) **Abstract**

The present disclosure provides a battery cooling block, comprising: a housing defining a flow chamber and comprising a first port and a second port configured to allow a flow of coolant through the flow chamber along a first axis; the housing further comprising a plurality of compartments disposed in the flow chamber, each compartment extending along a respective compartment axis perpendicular to the first axis and each compartment configured to receive a respective cylindrical battery cell; wherein each compartment is defined by a partially open compartment wall within the flow chamber, the compartment wall comprising a plurality of wall segments extending parallel to the compartment axis and which are circumferentially spaced apart around the compartment axis such that the respective battery cell is partially exposed to the flow of coolant. The present disclosure also provides a battery assembly, comprising: a plurality of cylindrical battery cells; and a battery cooling block as described above. Each of the plurality of cylindrical battery cells is received in a respective one of the plurality of compartments of the battery cooling block.

## Description

### Field of Invention

The present disclosure relates to a battery cooling block and a battery assembly.

### Background

Battery packs are used in many applications, including aerospace applications. Battery packs typically contain one or more battery cells which are closely packaged together. Battery cells produce heat during operation and during recharging. Overheating of the battery cells can cause undesirable effects in terms of causing battery failure or fires to occur. To mitigate this heating, cooling systems are typically used. These cooling systems use a cooling fluid to remove heat from the battery cells. Some cooling systems adopt an indirect cooling method, in which the cooling fluid and the battery cells are separated by an intermediate layer. Other cooling systems adopt a direct cooling method, in which the cooling fluid directly contacts the battery cells to provide a more immediate heat exchange between the battery cells and the cooling fluid.

For these direct cooling methods, challenges may arise when cooling a plurality of cells. In particular, the closely packed arrangement of the cells means that the cooling fluid may not be directed evenly across the cells and therefore the cells may be cooled unevenly. This can reduce the performance and cycle life of the battery cells.

It is therefore desired to develop a battery cooling system which seeks to address these issues.

### Summary

According to a first aspect, there is provided a battery cooling block, comprising: a housing defining a flow chamber and comprising a first port and a second port configured to allow a flow of coolant through the flow chamber along a first axis; the housing further comprising a plurality of compartments disposed in the flow chamber, each compartment extending along a respective compartment axis perpendicular to the first axis and each compartment configured to receive a respective cylindrical battery cell; wherein each compartment is defined by a partially open compartment wall within the flow chamber, the compartment wall comprising a plurality of wall segments extending parallel to the compartment axis and which are circumferentially spaced apart around the compartment axis such that the respective battery cell is partially exposed to the flow of coolant.

The plurality of wall segments may be symmetrically spaced apart around the compartment axis.

The plurality of wall segments may comprise four wall segments. Each wall segment may be circumferentially spaced apart from an adjacent wall segment by 90 degrees around the compartment axis.

Each compartment may extend through the housing.

The battery cooling block may further comprise a sealing element disposed in a groove formed in a surface of the compartment configured to receive the battery cell.

The cooling block may be formed by an additive manufacturing process.

According to a second aspect, there is provided a battery assembly, comprising: a plurality of cylindrical battery cells; and a battery cooling block according to the first aspect. Each of the plurality of cylindrical battery cells is received in a respective one of the plurality of compartments of the battery cooling block.

Each cylindrical battery cell may have a cylindrical surface defined by a cell circumference. Each of the plurality of wall segments of each compartment wall may extend circumferentially around the cylindrical surface of the respective battery cell by a respective width. A sum of the respective widths of the total number of wall segments of the compartment wall may be between 30-50% of the cell circumference.

The sum of the respective widths of the total number of wall segments of the compartment wall may be 40% of the cell circumference.

Each of the plurality of wall segments may extend parallel to the compartment axis by an axial length which is at least 50% of an axial length of the battery cell.

Each of the plurality of cylindrical battery cells may be retained in its respective compartment by a sealing element disposed between a cylindrical surface of the battery cell and a groove formed in a surface of the compartment facing the cylindrical surface of the battery cell.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief Description of the Drawings

Embodiments will now be described by way of example only, with reference to the Figures, in which:
Figure 1 is a sectional side view of a gas turbine engine;
Figure 2 is an isometric view of an example battery cooling block according to the present disclosure;
Figure 3 is a sectional isometric view of the example battery cooling block of Figure 2;
Figure 4 is a sectional top view of the example battery cooling block of Figures 2 and 3;
Figure 5 is an isometric view of a first example battery assembly according to the present disclosure;
Figure 6 is a sectional side view of the first example battery assembly of Figure 5;
Figure 7A is a sectional top view of part of the first example battery assembly of Figures 5 and 6;
Figure 7B is a sectional top view of part of a second example battery assembly; and
Figure 8 is a sectional top view of the first example battery assembly of Figures 5, 6 and 7A.

### Detailed Description

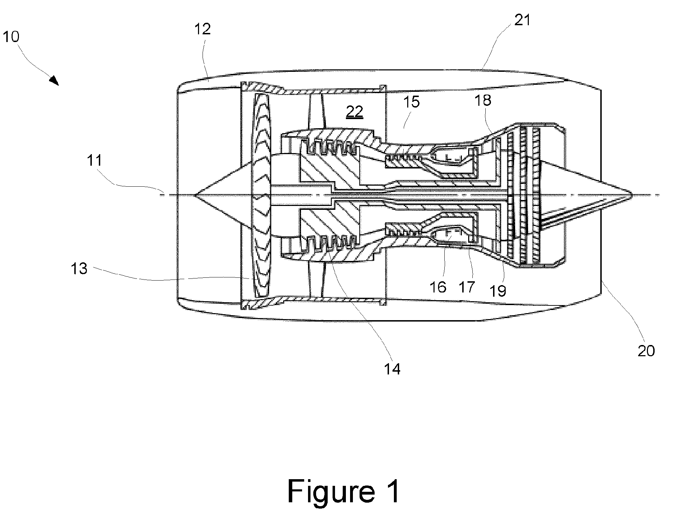

With reference to **Figure** 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate, and low-pressure turbines 17, 18, 19 before being exhausted through the nozzle 20 to provide additional propulsive thrust. The high 17, intermediate 18 and low 19 pressure turbines drive respectively the high-pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g., two) and/or an alternative number of compressors and/or turbines. Further the engine may comprise a gearbox provided in the drive train from a turbine to a compressor and/or fan.

Battery packs or battery assemblies can be used in various aerospace applications, such as in airplanes. Battery packs comprise a plurality of battery cells which are closely packaged together and electrically connected in a series and/or parallel configuration. Battery packs can comprise a battery cooling block which is used to provide cooling to the battery cells.

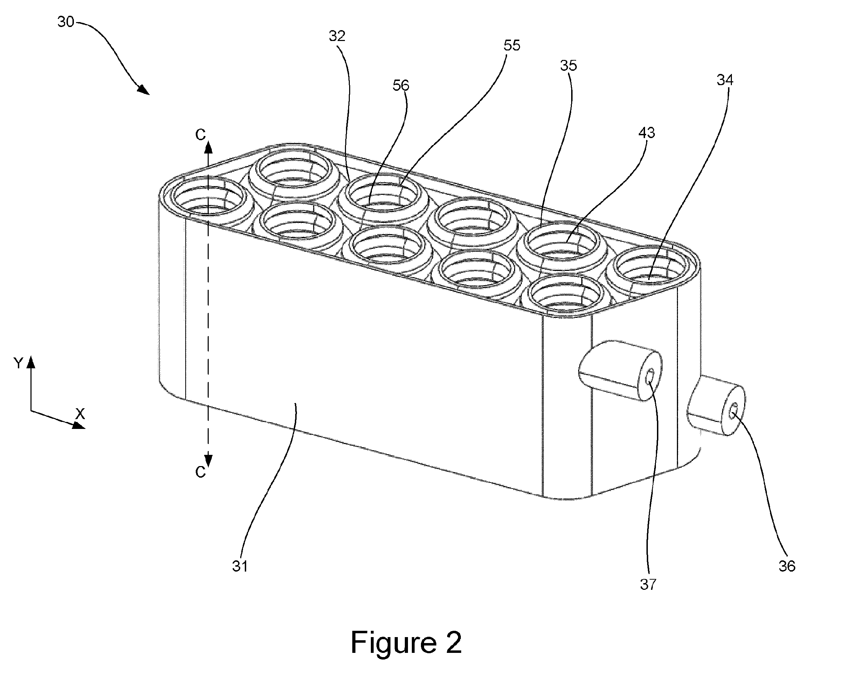

**Figure** 2 shows a battery cooling block 30 according to the present disclosure. The cooling block 30 comprises a housing 31. The housing 31 comprises a first port 36 and a second port 37. The first port 36 and the second port 37 are configured to allow a coolant to flow into and out of the housing 31 along a first axis X. For example, the first port 36 may act as an inlet to the housing 31 and the second port 37 may act as an outlet to the housing 31. A flow chamber 38 is therefore defined within the housing 31. The coolant may be any suitable coolant which can provide the level of heat exchange required. The coolant may be a fluidic coolant, for example a liquid coolant. For example, the coolant may comprise a dielectric coolant.

The cooling block 30 further comprises a plurality of compartments 34 extending into the housing 31. Each of the plurality of compartments 34 is configured to receive a cylindrical battery cell. A cylindrical battery cell has a cylindrical shape, with a circular cross-section. Each compartment 34 has a first opening 35 at a first end portion 43 on a first side 32 of the housing 31 and a second opening 39 at a second end portion 44 on a second side 33 of the housing 31. The second side 33 is opposed to the first side 31. Each compartment 34 therefore extends through the housing 31, having two open ends. The first opening 35 and the second opening 39 each have a generally circular cross-section which corresponds to the cylindrical battery cell. The compartments 34 are positioned in two parallel rows in the cooling block 30, with each compartment 34 being staggered with respect to the adjacent compartments 34 in the adjacent row.

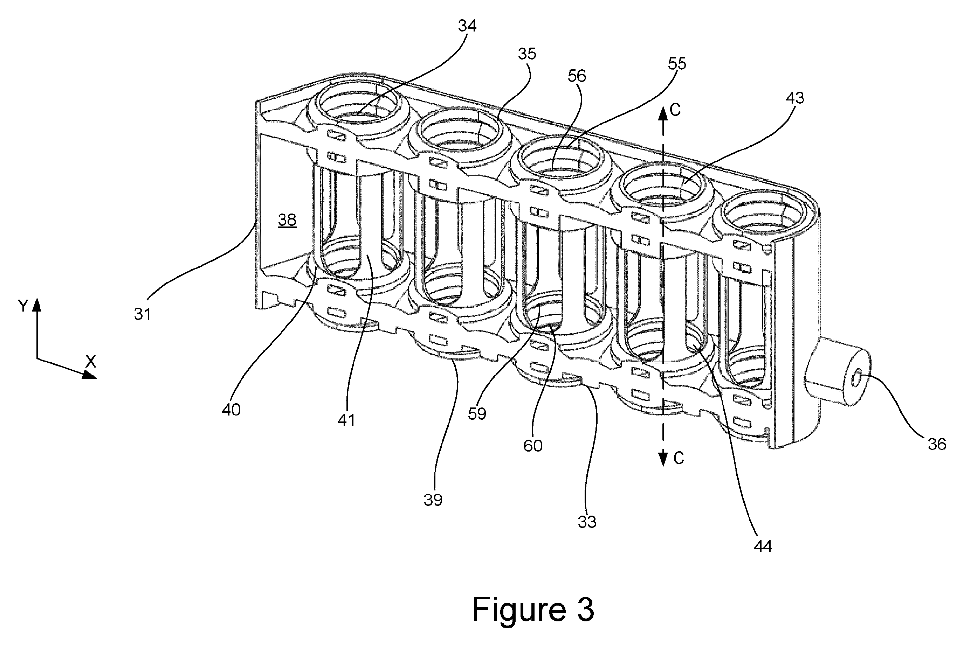

**Figure** 3 shows a cross-section through the cooling block 30 of Figure 2. Each of the plurality of compartments 34 extends along a respective compartment axis C. The compartment axis C is defined as lying on an axial centreline of the compartment 34. The compartment axis C is substantially perpendicular to the first axis X, and therefore substantially perpendicular to the direction of coolant flow through the flow chamber 38. Each compartment 34 defines a generally cylindrical volume within the flow chamber 38, which is sized to receive a cylindrical battery cell. Each compartment 34 is defined by a compartment wall 40 within the housing 31. The compartment wall 40 is partially open to allow coolant to flow into and out of the compartment 34 and make direct contact with the cylindrical surface of the battery cell when in use. The compartment wall 40 comprises a plurality of wall segments 41. The plurality of wall segments 41 extend parallel to the compartment axis C and are circumferentially spaced around the compartment axis, such that the plurality of wall segments 41 are spaced apart along a circumference of the compartment wall 40. Each of the wall segments 41 are connected to the housing 31 at each axial end of the wall segment 41. Due to the wall segments 41 being spaced apart, gaps are formed between adjacent wall segments 41, which results in the compartment wall 40 being partially open. The wall segments 41 are equally circumferentially spaced apart around the compartment axis C. The wall segments 41 are spaced so that they are symmetrically disposed about the compartment axis C. This enables the battery cell to be exposed to the coolant in an even manner across its cylindrical surface. In the present example, the compartment wall 40 is comprised of four wall segments 41 which are equally circumferentially spaced apart, such that the angle between adjacent wall segments is 90°. In other examples, the compartment wall may be comprised of any number of wall segments as long as two or more wall segments are present. In further examples, the wall segments may not be equally circumferentially spaced around the compartment axis C.

The housing 31 comprises a first pair of grooves 55, 56 formed in a surface of the compartment 34 which receives the cylindrical battery cell in use. In particular, the first pair of grooves 55, 56 are formed in a surface of the compartment 34 which faces the cylindrical surface of the battery cell 52. The first pair of grooves 55, 56 are disposed at the first end portion 43, between the first opening 35 of the compartment 34 and the compartment wall 40. The housing 31 also comprises a second pair of grooves 59, 60 formed in a surface of the compartment 34 which receives the cylindrical battery cell. In particular, the second pair of grooves 59, 60 are formed in a surface of the compartment 34 which faces the cylindrical surface of the battery cell 52 in use. The second pair of grooves 59, 60 are disposed at the second end portion 34, between the second opening 39 of the compartment 34 and the compartment wall 40. Each groove is generally circular and extends along the circumference of the compartment 34.

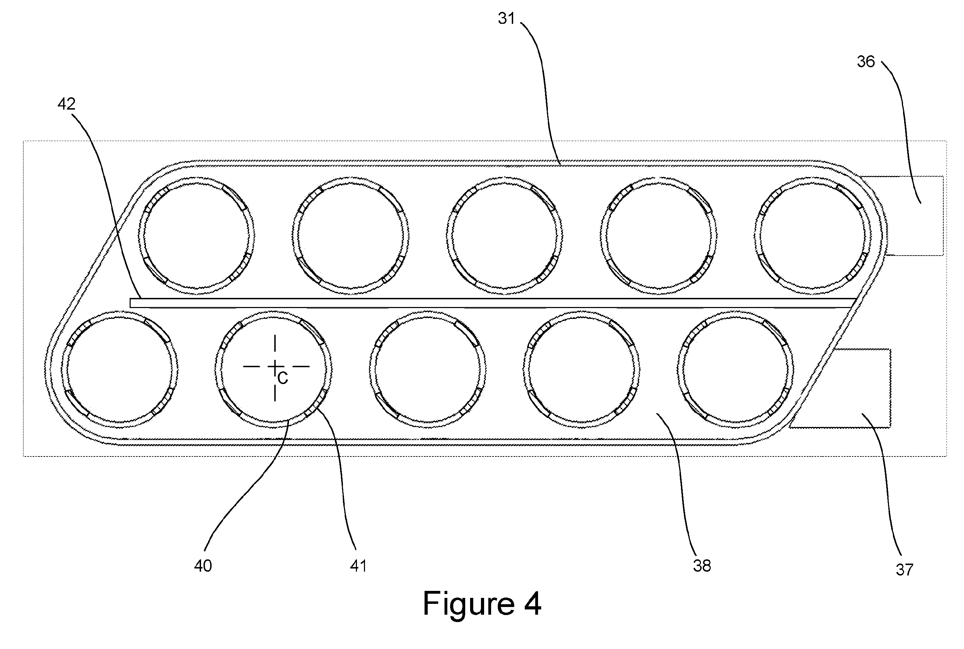

**Figure 4** shows a top-down cross-sectional view of the cooling block 30. As discussed above, the plurality of compartments 34 are arranged in two parallel rows in the cooling block 30. The compartments 34 are spaced apart from one another in the flow chamber, such that there is space between a given compartment 34 and adjacent compartments 34 and the wall of the housing 31. A divider 42 is disposed between the rows of compartments. The divider 42 extends along the length of the flow chamber 38 from an end of the housing 31 where the first and second ports 36, 37 are located, up to a point adjacent to the most distal compartment 34 from the end of the housing where the first and second ports 36, 37 are located. In this way, the divider 42 separates the two rows of compartments 34 into a first row and a second row. An aperture is provided in the divider 42 at the end of the divider 42 which is adjacent to the most distal compartment 34 from the first and second ports 36, 37. The divider 42 enables coolant to flow from one of the first port 36 and the second port 37, through the flow chamber 38 while contacting each of the compartments 34, to the other of the first port 36 and the second port 37. The divider 42 therefore ensures that the coolant flows in a controlled direction through the flow chamber 38 from one port to the other port. The divider 42 may be integrally formed with the housing 31.

The cooling block 30 may be formed from an additive manufacturing process. The additive manufacturing process may include a powder bed process, a material deposition process, or a 3D printing process. For example, the powder bed process may be a laser powder bed process. The cooling block 30 may alternatively be formed from a casting or moulding process. The cooling block 30 may be formed from a metal.

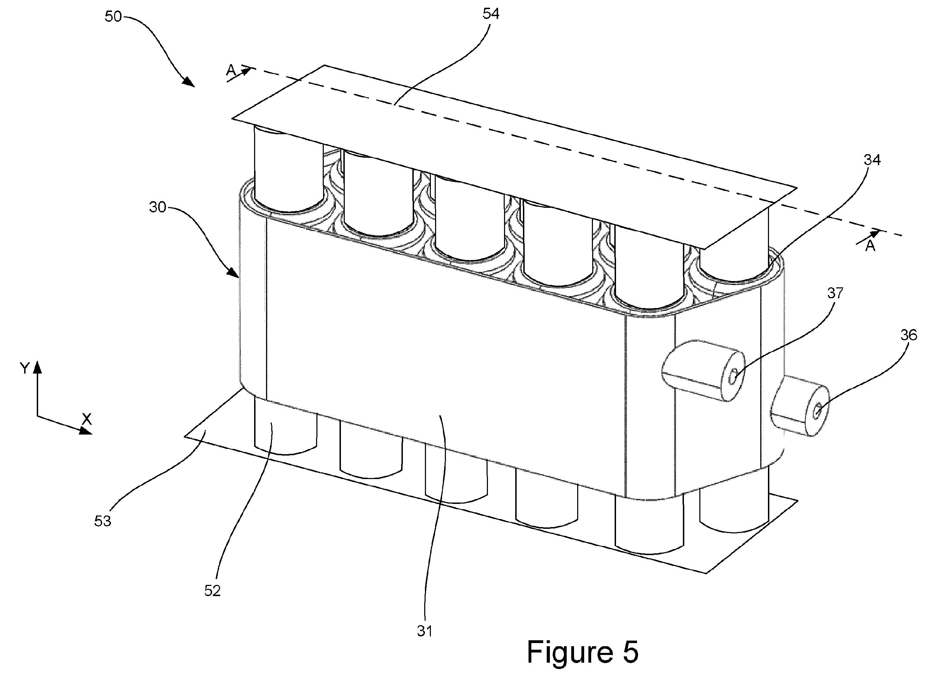

**Figure** 5 shows a first example battery assembly 50 according to the present disclosure. The battery assembly 50 comprises a plurality of cylindrical battery cells 52, the battery cooling block 30 as described above with reference to Figures 2-4, a first busbar 53, and a second busbar 54.

The cylindrical battery cells 52 may be any suitable battery having a generally cylindrical form, for example 18650 or 21700 cylindrical battery cells. Each of the plurality of cylindrical battery cells 52 is received in a respective one of the plurality of compartments 34 of the cooling block 30. Each battery cell 52 is inserted into the first opening 35 or the second opening 39 of the housing 31, such that at least part of the battery cell 52 is contained within the housing 31. In this example, a central part of each battery cell 52 is contained within the housing 31. At least 50% of the axial length of the battery cell 52 may be contained within the compartment 34. The height of the cooling block 30 may be varied depending on the level of cooling required for the battery cells being used.

The first busbar 53 and the second busbar 54 are provided for enabling electrical connection between the plurality of battery cells 52. The first and second busbars 53, 54, are formed as metallic strips and can be used to connect the battery cells 52 in parallel and/or in series.

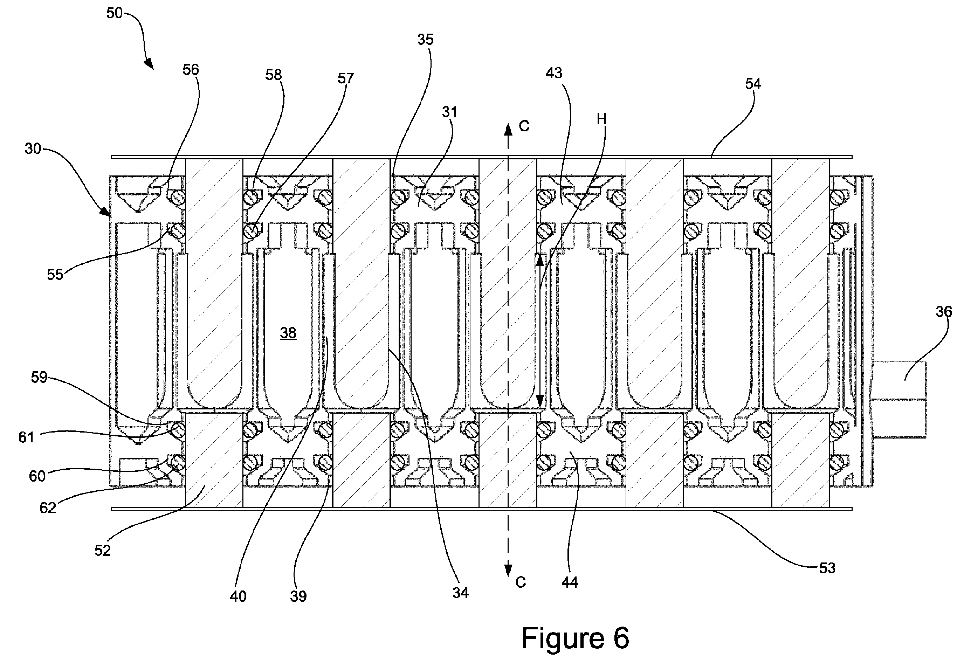

**Figure** 6 shows a sectional side view through the battery assembly 50 through the plane marked by the line A-A in Figure 5. Each of the wall segments 41 extends by a height H along the compartment axis C. The height H may be at least 50% of the axial length of the battery cell 52.

A sealing element 57, 58, 61, 62 is disposed in each of the grooves 55, 56, 59, 60. The sealing element 57, 58, 61, 62 can be formed from a non-metallic material, such as rubber or silicone. The sealing element 57, 58, 61, 62 may be resiliently deformable. The sealing element 57, 58, 61, 62 may be an O-ring seal. In use, each sealing element 57, 58, 61, 62 is disposed between the respective groove 55, 56, 59, 60 and the cylindrical surface of the respective battery cell 52. The sealing elements 57, 58 located at the first end portion 43 seal the gap between the cylindrical surface of the battery cell 52 and the housing 31 to prevent the coolant from leaking out of the housing 31 via the first opening 35. Similarly, the sealing elements 61, 62 which are located at the second end portion 44 seal the gap between the cylindrical surface of the battery cell 52 and the housing 31 to prevent the coolant from leaking out of the housing via the second opening 39. The sealing elements 57, 58, 61, 62 also act to retain the battery cell 52 in its position within the compartment 34. This retention can be provided by the gripping force provided by the contact between the sealing elements 57, 58, 61, 62 and the cylindrical surface of the battery cell 52. The sealing elements 57, 58, 61, 62 also prevent the battery cell 52 from contacting the compartment wall 40 or any part of the housing 31. In examples where the housing is formed from a metal and the sealing elements 57, 58, 61, 62 are from a non-metallic material such as rubber, the sealing elements 57, 58, 61, 62 ensure that the housing 31 is electrically insulated from the battery cells 52. The sealing elements 57, 58, 61, 62 also provide mechanical damping to the battery cells 52 in case of any impact to the battery assembly or cooling block 30.

In other examples, the housing 31 may only have one sealing element located adjacent to the first opening 35 and only one sealing element located adjacent to the second opening 39. In further examples, each compartment 34 may contain at least one retention feature configured to retain the battery cell 52 in its position within the compartment, in addition to or instead of the sealing element. For example, the retention feature may comprise clips, brackets, or suitable fasteners which can be used to hold the battery cell 52 in place.

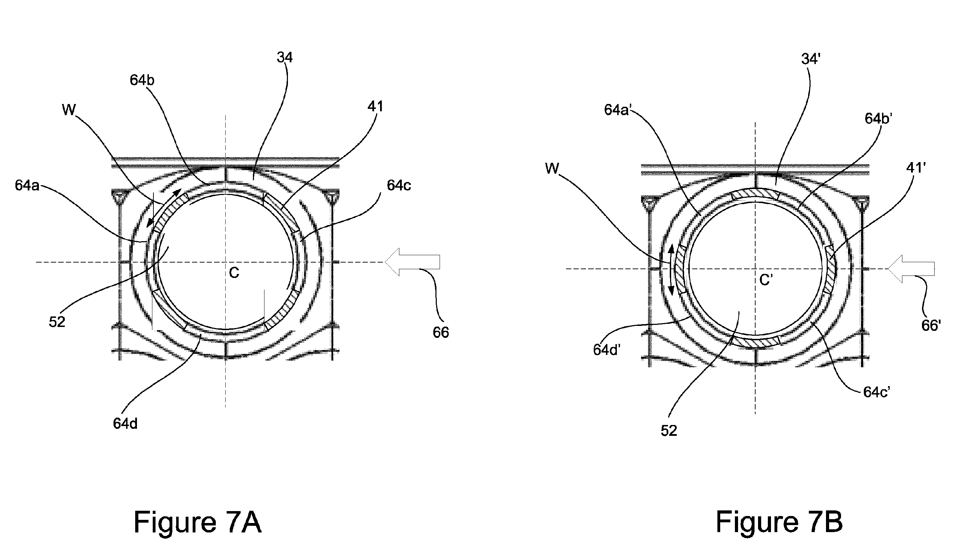

**Figure 7A** is a sectional top view through the battery assembly 50, which shows a cross-section through one of the compartments 34. Each of the wall segments 41 extends circumferentially by a respective width W. The sum of the respective widths W of the total number of wall segments 41 of a compartment 34 may be between 20-60% of the circumference of the battery cell 52, for example between 30-50% of the circumference of the battery cell 52, or around 40% of the circumference of the battery cell 52.

In the example shown in Figure 7A, the compartment wall 40 is comprised of four wall segments 41 which are circumferentially spaced apart by 90° around the compartment axis C. This means that there are four exposed portions 64a-64d of the compartment wall 40 formed by the gaps in between the wall segments 41. The general direction of flow 66 of the coolant is substantially perpendicular to the compartment axis C. In this example, there is one exposed portion 64a which faces towards the direction of coolant flow 66, two exposed portions 64b, 64d which face parallel to the direction of coolant flow 66, and one exposed portion 64c which faces away from the direction of coolant flow 66.

**Figure 7B** is a sectional top view through a second example battery assembly, which is substantially similar to the first example battery assembly 50. Like features are represented by like reference numerals. Where features are similar and correspond to the similar features of the first example slightly, they are represented by the same reference numeral, followed by a prime symbol. Figure 7B shows a cross-section through one of the compartments 34'. Similar to the first example as shown in Figure 7A, the compartment wall 40' is comprised of four wall segments 41' which are circumferentially spaced apart by 90° around the compartment axis C'. However, in this example, each of the wall segments 41' are rotated by 45° clockwise around the compartment axis C', relative to the example shown in Figure 7A. This means that there are four exposed portions 64a'-64d' of the compartment wall 40' formed by the gaps in between the wall segments 41', but oriented in different directions relative to the flow 66' of coolant. The general direction of flow 66' of the coolant is substantially perpendicular to the compartment axis C'. In this example, there are two exposed portions 64a', 64d' which face towards the direction of coolant flow 66' and two exposed portions 64b', 64c' which face away from the direction of coolant flow 66'.

Without wishing to be bound by theory, it is thought that heat exchange between the battery cell 52 and the coolant 66, and therefore cooling performance, is increased by increasing the surface area of the exposed portions of the compartment wall 40 which directly face in the direction of coolant flow 66. This means that the number of wall segments, the width of each wall segment, the angle of separation between adjacent wall segments, and their relative positions relative to the direction of coolant flow can be varied according to the level of cooling required in a particular application. It has been found that the optimum heat exchange between the battery cell 52 and the coolant 66 is provided by an arrangement in which each of the wall segments are rotated by 60° clockwise around the compartment axis C, relative to the example arrangement shown in Figure 7A.

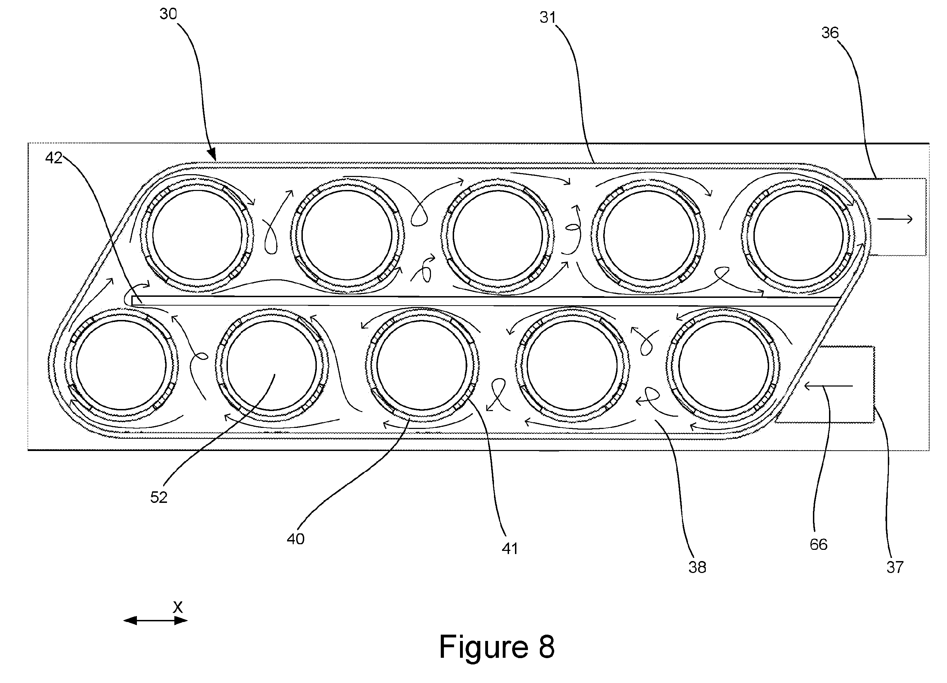

In use of the battery assembly, coolant is pumped through the cooling block 30 from one of the first port 36 and the second port 37 to the other of the first port 36 and the second port 37 to cause the coolant to flow substantially along the first axis X. The coolant is provided from a coolant source, which forms part of a fluid circuit including the cooling block 30 and a pump (not shown). **Figure 8** shows an example of how the coolant 66 flows through the cooling block 30 in use. In this example, the coolant 66 is pumped into the cooling block 30 via the second port 37 and the coolant 66 exits the cooling block 30 via the first port 36. The coolant 66 flows around and through each compartment 34, from the second port 37 to the first port 36. The divider 42 enables the coolant flow 66 to be diverted in this direction. As the coolant flow 66 passes through each compartment, due to the partially open compartment wall 40, the coolant 66 can directly contact the cylindrical surface of each battery cell 52 and transfer heat away from the battery cell 52 and to the coolant 66. As the coolant 66 flows around each compartment 34, the partially open compartment wall 40 created by the wall segments 41 which extend substantially perpendicular to the direction of coolant flow, create turbulence in the coolant flow 66. This turbulence in the coolant flow is created because the outer surface of the compartment wall 40 is not smooth, due to the gaps present between the spaced apart wall segments 41. The turbulent flow causes the coolant 66 to be diverted into the areas in the flow chamber 38 between adjacent compartments 34. This ensures that coolant flow 66 can contact the battery cell 52 all around its circumference, increasing the surface area of the battery cell 52 which comes into contact with the coolant 66. This increases the level of heat transfer between the battery cell 52 and the coolant 66 and therefore provides the cooling block 30 with increased cooling performance.

The present disclosure provides a battery cooling block for a battery assembly which has improved cooling performance. This improved cooling performance is provided by the partially open compartment wall formed by circumferentially spaced wall segments, which form a discontinuous surface for the coolant to flow past, creating turbulent flow in the flow chamber. This turbulent flow improves the coolant flow circulation in the flow chamber, which enables the coolant to contact a greater surface area of the battery cells, resulting in improved and more consistent cooling provided to all of the battery cells within the battery assembly. Each of the cells in the battery assembly may therefore be cooled to a more uniform extent. The wall segments defining each compartment also provide structural integrity to the cooling block by improving its rigidity.

Although it has been described in the above examples that each of the plurality of compartments extends all the way through the cooling block, having a first opening on a first side of the housing and a second opening on a second side of the housing, in other examples, one or more of the plurality of compartments may only extend partially into the cooling block. In these examples, the compartments may be configured to completely enclose one end of the respective battery cell, rather than both ends of the battery cell protruding out of the cooling block as shown in the above examples.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A battery cooling block, comprising:
a housing defining a flow chamber and comprising a first port and a second port configured to allow a flow of coolant through the flow chamber along a first axis;
the housing further comprising a plurality of compartments disposed in the flow chamber, each compartment extending along a respective compartment axis perpendicular to the first axis and each compartment configured to receive a respective cylindrical battery cell;
wherein each compartment is defined by a partially open compartment wall within the flow chamber, the compartment wall comprising a plurality of wall segments extending parallel to the compartment axis and which are circumferentially spaced apart around the compartment axis such that the respective battery cell is partially exposed to the flow of coolant,
the plurality of wall segments are symmetrically spaced apart around the compartment axis, and
wherein the plurality of wall segments comprises four wall segments, each wall segment circumferentially spaced apart from an adjacent wall segment by 90 degrees around the compartment axis.

2. A battery cooling block as claimed in claim 1, wherein each compartment extends through the housing.

3. A battery cooling block as claimed in claim 1 or claim 2, further comprising a sealing element disposed in a groove formed in a surface of the compartment configured to receive the battery cell.

4. A battery cooling block as claimed in any preceding claim, wherein the cooling block is formed by an additive manufacturing process.

5. A battery assembly, comprising:
a plurality of cylindrical battery cells; and
a battery cooling block according to any of claims 1-4;
wherein each of the plurality of cylindrical battery cells is received in a respective one of the plurality of compartments of the battery cooling block.

6. A battery assembly as claimed in any preceding claim, wherein each cylindrical battery cell has a cylindrical surface defined by a cell circumference; and
wherein each of the plurality of wall segments of each compartment wall extends circumferentially around the cylindrical surface of the respective battery cell by a respective width; and
wherein a sum of the respective widths of the total number of wall segments of the compartment wall is between 30-50% of the cell circumference.

7. A battery assembly as claimed in claim 6, wherein the sum of the respective widths of the total number of wall segments of the compartment wall is 40% of the cell circumference.

8. A battery assembly as claimed in any of claims 5-7, wherein each of the plurality of wall segments extends parallel to the compartment axis by an axial length which is at least 50% of an axial length of the battery cell.

9. A battery assembly according to any of claims 5-8, wherein each of the plurality of cylindrical battery cells is retained in its respective compartment by a sealing element disposed between a cylindrical surface of the battery cell and a groove formed in a surface of the compartment facing the cylindrical surface of the battery cell.
